**Europäisches Patentamt**

**European Patent Office**

**Office européen des brevets**

(19)

(11) Veröffentlichungsnummer: **0 183 067**
**B1**

(12) # EUROPÄISCHE PATENTSCHRIFT

(45) Veröffentlichungstag der Patentschrift:
**04.01.89**

(51) Int. Cl.⁴: **F 16 F 15/22,** F 16 F 15/32,
F 16 D 3/68

(21) Anmeldenummer: **85113683.8**

(22) Anmeldetag: **28.10.85**

(54) **Rotationskörper.**

(30) Priorität: **27.11.84 DE 3443146**

(43) Veröffentlichungstag der Anmeldung:
**04.06.86 Patentblatt 86/23**

(45) Bekanntmachung des Hinweises auf die Patenterteilung:
**04.01.89 Patentblatt 89/1**

(84) Benannte Vertragsstaaten:
**BE DE FR GB IT**

(56) Entgegenhaltungen:
**DE-B-1 575 890**
**DE-C-1 078 821**
**FR-A-2 401 360**

(73) Patentinhaber: **GOETZE AG, Bürgermeister-Schmidt- Strasse 17, D-5093 Burscheid 1 (DE)**

(72) Erfinder: **Stephan, Bernd, Endringhausen 5, D-5630 Remscheid- Lennep (DE)**

EP 0 183 067 B1

**Beschreibung**

Die Erfindung betrifft einen Rotationskörper bestehend aus einem Ring aus einem Elastomermaterial, der unter Bildung einzelner sich in Umfangsrichtung erstreckender Elastomersäulen mit mehreren einvulkanisierten metallischen Verbindungs- oder Befestigungselementen versehen ist, wobei die Verbindungs- oder Befestigungselemente je einen zentralen Bereich zu Aufnahme von Verbindungs- oder Befestigungsmitteln sowie zumindest einen radial verlaufenden Flügel aufweisen, welcher Flügel an seinen Stirnflächen vom zentralen Bereich weg abgeschrägt ist.

Rotationskörper der angesprochenen Gattung sind in vielfältiger konstruktiver Ausbildung dem Stand der Technik zu entnehmen. Stellvertretend wird lediglich die DE-C-1 078 821 angeführt, die aus einem polygonförmigen Gummiring besteht und im Bereich der Polygonecken zweiteilige, durch Schweißen miteinander verbundene Spannhülsen aufweist, die als Verbindungselemente für Endbereiche von Wellen oder dergleichen dienen. Derartige Wellenkupplungen werden bevorzugt im Antriebsstrang von Kraftfahrzeugen eingesetzt.

Durch die Einführung von Fünfganggetrieben in den Kraftfahrzeugen sind die Drehzahlen der Kardanwellen gestiegen. Im Hinblick auf den daraus resultierenden ansteigenden Unwuchtzustand sind derartige Wellenkupplungen nur noch begrenzt einsetzbar. Aufgrund von Formtoleranzen, Hülsentoleranzen und dergleichen ist es schwierig, Rotationskörper, wie insbesondere elastische Wellenkupplungen, mit der geforderten Wuchtgüte prozessfähig herzustellen.

Der Erfindung liegt somit die Aufgabe zugrunde, einen Rotationskörper der angesprochenen Gattung so zu konzipieren, daß er im Hinblick auf seine Wuchtgüte zumindest den heutigen Anforderungen gewachsen ist.

Diese Aufgabe wird erfindungsgemäß dadurch gelöst daß zum Zwecke des Auswuchtens die abgeschrägten Stirnflächen mit zumindest partiell wieder entfernbaren Elastomeransätzen versehen sind.

Für den gattungsgemäßen Rotationskörper ist es von besonderer Bedeutung, daß die Elastomersäulen als eigentlicher Funktionskörper in keiner Weise geändert werden darf, da sonst die eingestellte Dämpfungsfrequenz beeinträchtigt würde. Durch die erfindungsgemäße Ausbildung des Rotationskörpers wird seine schwingungsdämpfende Funktion in keiner Weise beeinflußt.

Einem weiteren Gedanken der Erfindung gemäß liegen die mit entfernbaren Elastomeransätzen versehenen Flügel radial außerhalb des jeweiligen zentralen Bereichs der Verbindungs- oder Befestigungselemente.

Die Erfindung ist in der Zeichnung beispielsweise dargestellt, und wird im folgenden näher beschrieben.

Es zeigen:

Figur 1 polygonförmigen Rotationskörper
Figuren 2 - 4 Ausbildung der metallischen Verbindungs- beziehungsweise Befestigungselemente vor der Vulkanisation, nach der Vulkanisation sowie nach dem Auswuchten.

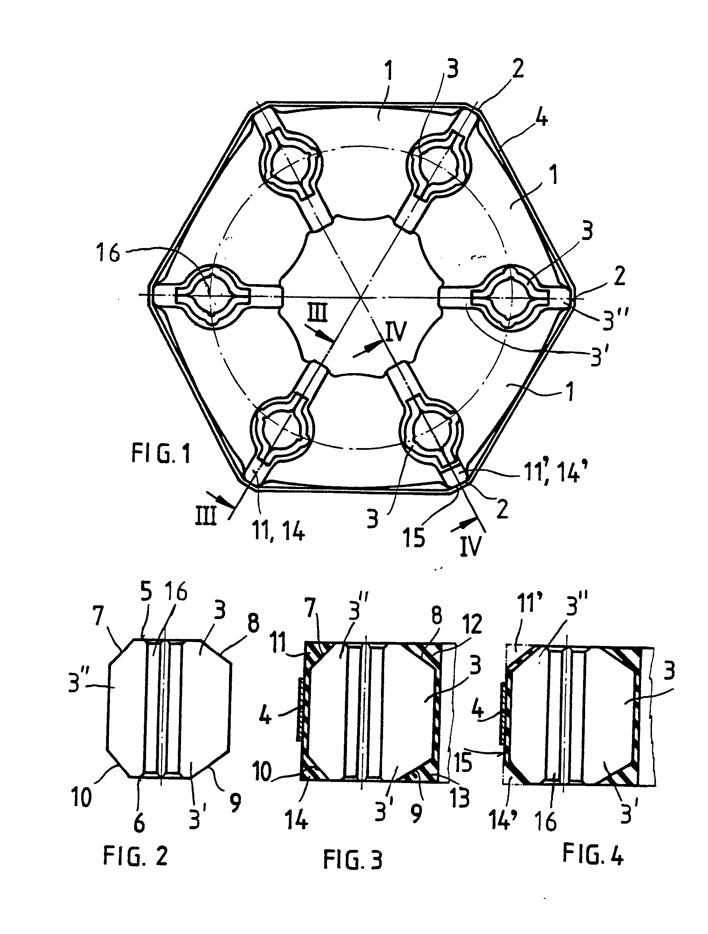

Figur 1 zeigt einen polygonförmigen Rotationskörper, der aus mehreren Elastomersäulen 1 sowie im Bereich der Polygonecken 2 angeordneten zweiteiligen, vorzugsweise durch Schweißen miteinander verbundenen Befestigungselementen 3 zusammenvulkanisiert ist. Zur Erleichterung der Montage des Polygonkörpers und um im Betriebszustand eine gezielte Vorspannung in den Elastomersäulen 1 zu erzeugen, ist im radial äußeren Umfangsbereich ein Spannband angeordnet, das nach erfolgter Montage wieder entfernt wird.

Die Figuren 2 bis 4 zeigen die Befestigungsbeziehungsweise Verbindungselemente im Querschnitt. Das dargestellte Element 3 in Figur 2 weist einen zentralen Bereich 16 auf mit radial verlaufenden Flügeln 3', 3'', welche an den Stirnflächen 5, 6 abgeschrägte Bereiche 7 bis 10 aufweist. In diesem Zustand werden die Elemente 3 in eine nicht weiter dargestellte Vulkanisierform eingebracht.

Figur 3 zeigt die Elemente 3 nach der Vulkanisation. Die abgeschrägten Bereiche 7 bis 10 sind, den Querschnitt im wesentlichen wieder zu einem Zylinder ergänzend, mit Elastomermaterial aufgefüllt, wobei die angesprochenen Elastomeransätze 11 bis 14 gebildet werden. Ebenfalls erkennbar ist das bereits aufgelegte Spannband 4.

Figur 4 zeigt ein Befestigungs- bzw. Verbindungselement 3 nach dem Auswuchten. Die im radial außerhalb des zentralen Bereichs 16 der Flügel 3'' angeordneten Elastomeransätze 11 und 14 wurden abgeschliffen 11', 14', um so einen der geforderten Wuchtgüte entsprechenden Rotationskörper zu schaffen.

**Patentansprüche**

1. Rotationskörper bestehend aus einem Ring aus einem Elastomermaterial, der unter Bildung einzelner sich in Umfangsrichtung erstreckender Elastomersäulen (1) mit mehreren Befestigungselementen (3) versehen ist, wobei die Verbindungs- oder Befestigungselemente (3) je einen zentralen Bereich (16) zur Aufnahme von Verbindungs- oder Befestigungsmitteln sowie zumindest einen radial verlaufenden Flügel (3', 3'') aufweisen, welcher Flügel (3', 3'') an seinen Stirnflächen (7 bis 10) vom zentralen Bereich (16) weg abgeschrägt ist, dadurch gekennzeichnet, daß zum Zwecke des Auswuchtens die abgeschrägten Stirnflächen (7 bis 10) mit zumindest partiell wieder entfernbaren Elastomeransätzen (11 bis 14 und 11' bis 14') versehen sind.

2. Rotationskörper nach dem Anspruch 1, dadurch gekennzeichnet, daß die mit entfernbaren Elastomeransätzen (11, 14) versehenen Flügel (3'') radial außerhalb des jeweiligen zentralen Bereiches (16) der Verbindungs- und Befestigungselemente (3) liegen.

## Claims

1. A rotationally symmetrical body comprising a ring of an elastomer material, which is provided with a plurality of fixing elements (3), forming individual circumferentially extending elastomer columns (1), wherein the connecting or fixing elements (3) each have a central region (16) for receiving connecting or fixing means, and at least one radially extending vane (3', 3''), which vane (3', 3'') is bevelled at its end faces (7 to 10) away from the central region (16), characterised in that for the purposes of balancing the bevelled end faces (7 to 10) are provided with elastomer attachments (11 to 14 and 11' to 14') which can be at least partially removed again.

2. A rotationally symmetrical body according to claim 1, characterized in that the vanes (3'') provided with removeable elastomer attachments (11, 14) lie radially outwardly of the respective central region (16) of the connecting and fixing elements (3).

## Revendications

1. Elément de rotation constitué par un anneau en matériau élastomère qui est muni de plusieurs éléments de fixation (3) tandis que différents barreaux (1) élastomères sont disposés sur sa circonférence, les éléments (3) de liaison ou de fixation présentant chacun une zone centrale (16) pour recevoir des moyens de liaison ou de fixation ainsi qu'au moins une aile (3', 3'') se prolongeant radialement, ladite aile (3', 3'') étant coupée en biseau au niveau de ses surfaces frontales (7 à 10) du côté le plus éloigné de la zone centrale (16), caractérisé en ce que les surfaces frontales (7 à 10) coupées en biseau sont munies de garnitures (11 à 14 et 11' à 14') élastomères pouvant être enlevées au moins partiellement.

2. Elément de rotation selon la revendication 1, caractérisé en ce que les ailes munies des garnitures (11, 14) élastomères pouvant être enlevées se trouvent disposées radialement, se prolongeant vers l'extérieur, par rapport à la zone centrale (16) associée des éléments de liaison et de fixation.

FIG. 1

FIG. 2

FIG. 3

FIG. 4